# EUROPÄISCHE PATENTANMELDUNG

(11) **EP 0 788 009 A2**
(43) Veröffentlichungstag der Anmeldung: **06.08.1997**
(21) Anmeldenummer: 97250009.4
(22) Anmeldetag: 23.01.1997
(51) Int. Cl.: G02C 5/22, G02C 1/08

(54) **Brillenfassung mit einer gegen Lösen gesicherten Scharnierschraubenverbindung für die Fassungsteile**

(30) Priorität: 01.02.1996 DE 19604917
(71) Anmelder: Huma GmbH, 14712 Rathenow (DE)
(72) Erfinder: Huber, Ulrich, Dipl.-Ing., 14712 Rathenow (DE)
(74) Vertreter: Henze, Lothar

(57) **Zusammenfassung**

Die Erfindung betrifft eine Brillenfassung mit einer gegen Lösen gesicherten Scharnierschraubenverbindung für die Fassungsteile.

Es war eine Scharnierschraubenverbindung zu schaffen, welche durch eine neuartige Gestaltung in der Verbindungszone der Scharnierschraube und dem zweirolligen Scharnier eine werkstoffelastische Sicherung gegen das Lösen der Schraube herstellt.
Erfindungsgemäß ist an der Schraubenbohrung des zweirolligen Scharnierteils eine ringförmige Verjüngung mit einem Verjüngungswinkel von 8° bis 20° vorgesehen, die unter einem spitzen Winkel (γ) zur Bohrungsmittenachse in Richtung auf den Schlitzbereich des zweirolligen Scharnierteils verläuft. An der Scharnierschraube ist im Schaftbereich eine Ringnut vorgesehen, in die die Verjüngung des zweirolligen Scharnierteils im eingeschraubten Zustand der Schraube elastisch eingreift.

## Beschreibung

Die Erfindung betrifft eine gegen Lösen gesicherte Schamierschraubenverbindung für Brillenfassungsteile wie Bügel- und Backenkombinationen.

Die Scharnierschraubenverbindung soll eine vollkommene Sicherheit gegen das Lösen der Schraube und damit der Scharnierteile besitzen und mit den bekannten Fertigungsmethoden hergestellt und montiert werden können.

Für das Problem der Schraubenlõsesicherheit sind verschiedene Ausbildungsformen bekannt.

Z. B. wird versucht, durch den Ersatz des Schraubenbolzens das Löseproblem der Schraube zu umgehen. Derartige Varianten erreichen nicht die notwendige Festigkeit, da die Schamierlappen oft nur geklemmt werden oder Kunststoffteile benötigen. Außerdem kennt man Varianten für Scharnierverbindungen, die durch zusätzliches Auftragen einer weichen Klemmschicht, z.B. aus Kunststoff, zwar ein Lösen der Schraube erschweren, aber nicht eine echte Lösesicherheit gewähren.

In einer Ausführung nach der DE-Patentschrift 3737126 soll eine größere Sicherheit gegen das Lösen der Schraubverbindung dadurch erreicht werden, daß im Bereich der Schraubenkopfauflagefläche durch verschiedenartige Gestaltung dieses Bereiches ein plastischer Formschluß zwischen der Schraube und dem Scharnierteil vorgesehen ist. Bei dieser Ausführung treten allerdings beim Verschrauben am Schraubenkopfbereich erhebliche plastische Umform- und Flächenreibkräfte auf den Schraubenkopf auf, wodurch sich die Scharnierteile im Bohrungsbereich des Schraubenkopfes plastisch verformen und zum Verklemmen der Scharnierteile wegen der auftretenden Materialdeformation des zweirolligen Scharnierteils führen. Der Einsatz einer solchen Scharnierverbindung wird dem funktionalen Anspruch nicht gerecht, da die erhebliche Gefahr des Verklemmens wegen des plastischen Formschlußes nicht gelöst ist und so die Schraubensicherung zu Ungunsten der Scharnierfunktion ausgebildet ist, so daß keine befriedigende Scharnierlösung erreicht wird. Bedenkt man weiter, daß bei einem hochwertigen Scharnier im Schlitzbereich sehr genaue Passungen zur Funktionsfähigkeit erreicht werden müssen, so können bei einem Scharnier nach dieser Ausführung aufgrund der auftretenden Lappendeformation die notwendigen Paßgenauigkeiten nicht erreicht werden. An einer Ausführung nach EP 393244 wird nicht berücksichtigt, daß die wirkenden Reibkräfte auf den Schraubenbolzen bei der Drehbewegung der Scharnierteile direkt auf den Schraubenbolzen wirken und sich dieser deshalb lösen kann.

In anderen Ausführungen, wie z. B. EP 24 95 71 werden zusätzliche Bauteile eingesetzt, wodurch die Herstellung erschwert ist. Beim Einsatz im Schamierbereich wirkt außerdem das Lösereibmoment ebenso auf die Schraube.

Aus der DE 37 37 126 C1 ist es bekannt, um die Bohrung im zweirolligen Scharnierteil an der Auflagefläche des Schraubenkopfes eine konusartige Erhöhung und am Schraubenbolzeninnenrand unter dem Schraubenkopf eine konusartige Einschnürung vorzusehen. Beim Einschrauben der Schraube soll sich die konusartige Erhöhung so verformen, daß sie in die Einschnürung am Schraubenbolzen eingreift.

Die erforderliche plastische Verformung der konusartigen Erhöhung führt aber dazu, daß ein hoher Druck durch die Schraube aufgebracht werden muß, was zu einem hohen axialen Druck auf die Scharnierflächen und damit zur Schwergängigkeit des Scharniers führt. Außerdem wird das Schraubengewinde hoch belastet.

Der Erfindung liegt die Aufgabe zugrunde, die bekannten Scharniergelenke so zu verbessern, daß eine Ausführung geschaffen wird, die eine echte Sicherheit gegen das Lösen der Schamierschraube gewährleistet und zwar dergestaltet, daß die Funktionalität des Scharniers nicht beeinträchtigt wird.

Zudem sollen weitere Anforderungen an die Scharniere wie die Gängigkeit, die verfahrenspezifischen Einflüsse, wie z. B. proplemloser Einsatz in der Schweiß-und Löttechnologie, erfüllt sein. Die bekannten Herstellmethoden sollen weiterhin wirtschaftlich eingesetzt werden können, um damit eine marktgerechte und sinnvolle Nutzung möglich zu machen.

Die Aufgabe wird entsprechend den Merkmalen des Anspruchs 1 gelöst.

Die Schraubverbindung ist mit einem elastischen Formschluß versehen, bei dem an sich bekannte Schamierteile nach dem Oberbegriff des Anspruchs 1 In erfinderischer Ausgestaltung eingesetzt werden.

An einem zweirolligen Scharnierteil wird dabei eine Schaftbohrung vorgesehen, die eine spitzwinklige Schaftverjüngung, vorzugsweise mit einem Verjüngungswinkel von 8° - 20°, aufweist. Diese Schaftverjüngung weist als Bohrungsdurchbruch unter einem spitzen Winkel zur Bohrungsmittenachse zum Schlitzbereich des zweirolligen Scharnierteils und ist gegenüber dem Schraubenschaftquerschnitt im Durchmesser kleiner.

Die Schrauben sind besonders dadurch gekennzeichnet, daß sie im Schaftbereich eine geometrisch genau auf die Scharnierbohrung abgestimmte Ringnut aufweisen und weiterhin so gestaltet sind, daß der Gewindebolzen im Durchmesser kleiner als der Schaftbereich ist.

Zur Lösung der Aufgabe liegt die Verjüngung des zweirolligen Scharnierteiles vorzugsweise gleichseitig an der Planfreisenkung des einrolligen Scharniers im gestecktem Zustand an, wodurch beim Einführen und Festziehen der Schraube der spitzwinklige, elastisch beanspruchte Werkstoffbereich um die Radialverjüngung sich zuerst elastisch in die Planfreisenkung des einrolligen Scharniers umgelegt und dann bei festgezogener Schraube elastisch in den Nutring der Schraube springt.

Hiermit ist die Funktionalität der Scharnierverbindung gegeben. Es entstehen keine störenden Materialdeformationen, die den Scharniereinsatz einschränken würden, und durch den elastisch verursachten Formschluß ist die Sicherheit der Schraube gegen Lösen unter Berücksichtugung anderer wichtiger Scharniergebrauchsfunktionen vollkommen gewährleistet.

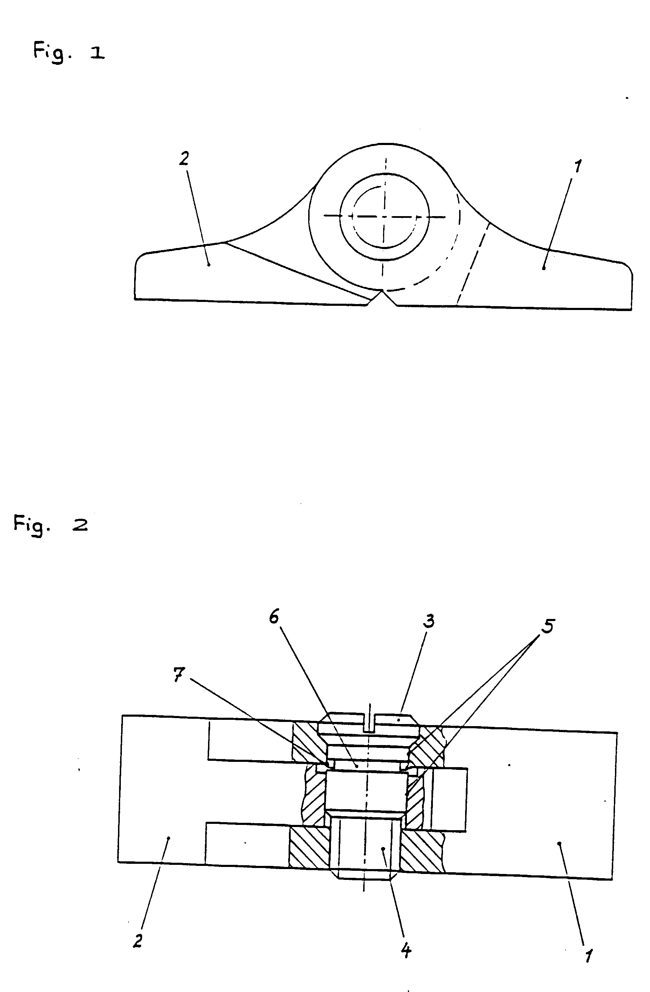

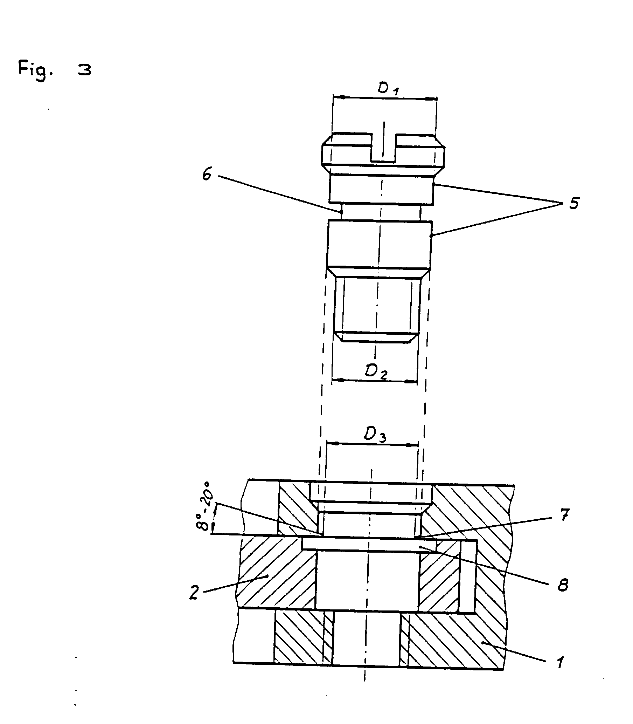

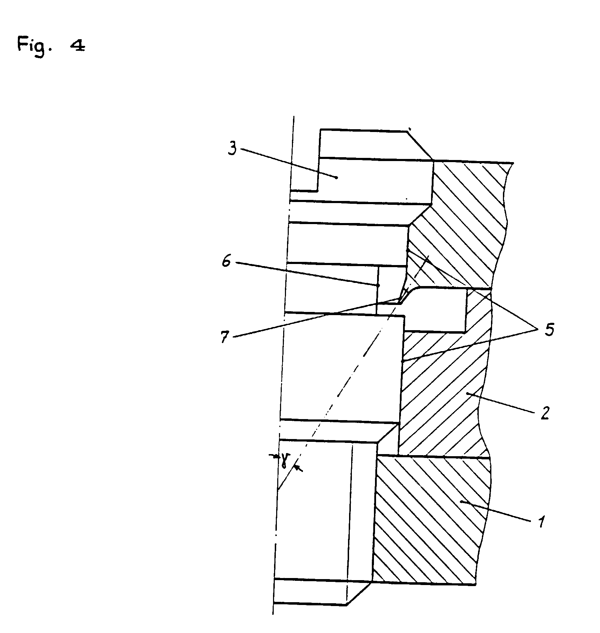

Weitere Einzelheiten zu der erfindungsgemäßen Ausführung mit einer gegen Lösen gesicherten Scharnierschraubenverbindung sind in den Zeichnungen Figur 1 bis Figur 4 dargestellt und werden nachfolgend beschrieben.
- Fig. 1: zeigt eine Seitenansicht des neuen Scharniers,
- Fig. 2: zeigt den Querschnitt durch das verschraubte neue Scharnier,
- Fig. 3: zeigt den Querschnitt durch die Bohrungsgeometrie der Schraubenverbindung vor der Montage mit der Schraube in Verschraubposition und
- in Fig. 4: wird die als elastische Zone ausgebildete Schraubensicherung im Halbquerschnitt dargestellt.

Wie aus den Zeichnungen ersichtlich ist, besteht das Scharnier aus dem zweirolligen Scharnierteil 1 und einem einrolligen Scharnierteil 2.

Die Scharnierschraube 3 mit dem Gewindebolzen 4 besitzt einen Schaftbereich 5 mit dem Durchmesser D1 und einen Ringnutbereich 6. Der Gewindebolzen hat vorzugsweise einen kleineren Durchmesser D2 als der Schraubenschaftbereich 5. Das zweirollige Scharnierteil weist eine spitzwinklige Verjüngung 7 auf, vorzugsweise mit einem spitzen Verjüngungswinkel zwischen 8° -20°, und liegt der Gewindebohrung gegenüber, wobei die Verjüngung den Bohrungsdurchbruch zum Schlitzbereich bildet und unter einem spitzen Winkel γ zur Bohrungsmittenachse verläuft.

Die verjüngte Schaftbohrung weist einen Durchmesser D3 auf, der minimal den Durchmesser D 2 erreicht, damit der Gewindebolzen frei eingeführt werden kann, der aber kleiner als D1 ist.

An dem einrolligen Scharnierteil ist eine Plansenkung 8 vorgesehen , und beim Einführen der Schraube wird die Verjüngung 7 des zweirolligen Scharnierteils wegen des größeren Durchmessers D2 am Schraubenschaft in die Plansenkung 8 elastisch umgelegt, so daß keine Materialdeformationen entstehen können.

Wird die Schraube 3 festgezogen, springt der elastische radiale Verjüngungsbereich 7 in die radiale Ringnut 6 der Schraube. Damit wird eine neuartige vorgespannte formschlüssige Schraubverbindung hergestellt.

Durch die dargelegte Gestaltung wird das Selbstlösen der Schraube vollkommen ausgeschlossen.

Weiterhin wird durch die elastische Verspannung der Schraube in der Ringnut erreicht, daß die auftretenden elastischen Axialspannungen gleichmäßig auf die Scharnierlaufflächen wirken und sich verteilen können. Da keine Materialdeformationen auftreten werden homogene Kraftverhältnisse auf die Scharnierlaufflächen erreicht, wodurch eine besonders gute Gängigkeit der Scharniere ermöglicht wird.

## Patentansprüche

1. Brillenfassung mit einer gegen Lösen gesicherten Scharnierschraubenverbindung für Fassungsteile mit einer formschlüssigen Verbindung zwischen der Schraube (3) und einem zweirolligen Scharnierteil (1), bei der ein am zweirolligen Scharnierteil (1) angeordneter Materialansatz in eine Aussparung an der eingedrehten Schraube (3) eingreift,
dadurch gekennzeichnet,
daß an der Schraubenbohrung des zweirolligen Scharnierteils (1) eine ringförmige Verjüngung (7) mit einem Verjüngungswinkel kleiner 45° , vorzugsweise von 8° bis 20° , vorgesehen ist, die unter einem spitzen Winkel (γ) zur Bohrungsmittenachse in Richtung auf den Schlitzbereich des zweirolligen Scharnierteils (1) verläuft und daß an der Scharnierschraube (3) im Schaftbereich (5) eine Ringnut (6) vorgesehen ist, in die die Verjüngung (7) des zweirolligen Scharnierteils (1) im eingeschraubten Zustand der Schraube (3) elastisch eingreift, und daß am einrolligen Scharnierteil (2) eine Plansenkung (8) vorgesehen ist, welche zum Bohrungsdurchbruch der radialen Verjüngung (7) des zweirolligenScharnierteils (1) weist.

2. Brillenfassung nach Anspruch 1,
dadurch gekennzeichnet,
daß die Schraube (3) imSchaftbereich (5), in dem die Ringnut (6) liegt, einen größeren Durchmesser besitzt als im Gewindebereich und die Ringnut (6) im Schaftbereich (5) auf die entsprechende radiale Verjüngung (7) des zweirolligen Schamierteils (1) so abgestimmt ist, daß die Schraube (3) im verschraubten Zustand in axialer Richtung elastisch vorgespannt ist.

3. Brillenfassung nach einem der Ansprüche 1 oder 2,
dadurch gekennzeichnet,
daß die erfindungsgemäße Verschraubtechnik an jeder Art von Gelenk, wie z. B. Federscharnieren, einsetzbar ist.
